# FASCICULE DE BREVET EUROPEEN

(11) **EP 3 616 445 B1**
(45) Date de publication et mention de la délivrance du brevet: **26.10.2022**
(21) Numéro de dépôt: 18725277.0
(22) Date de dépôt: 23.04.2018
(51) Int. Cl.: H04W 52/02, H04W 24/02, H04W 84/12

(54) **OPTIMISATION DE LA CONSOMMATION ET DE LA COUVERTURE D'UN RÉSEAU LOCAL**
OPTIMIERUNG DES VERBRAUCHS UND DER REICHWEITE EINES LOKALEN NETZWERKS
OPTIMISING THE CONSUMPTION AND COVERAGE OF A LOCAL AREA NETWORK

(30) Priorité: 24.04.2017 FR 1753534
(43) Date de publication de la demande: 04.03.2020
(73) Titulaire: Orange, 92130 Issy-les-Moulineaux (FR)
(72) Inventeur: LE GUILLOU, Xavier, 92326 Châtillon Cedex (FR); BRICHETEAU, Dimitri, 92326 Châtillon Cedex (FR)
(86) Numéro de dépôt international: PCT/FR2018/051009
(87) Numéro de publication internationale: WO 2018/197791

(56) Documents cités:
- US-A1- 2012 099 495
- US-A1- 2016 029 407
- US-A1- 2016 234 783

## Description

### Domaine technique

L'invention se rapporte à un réseau équipé de plusieurs points d'accès.

L'invention s'applique en particulier à tout réseau local sans fils proposant plusieurs points d'accès aux terminaux du réseau.

### Etat de la technique

Un réseau local est un réseau informatique qui relie ensemble, avec ou sans fils, les terminaux d'une maison (ordinateurs, périphériques d'impression, de stockage, etc.) aptes à communiquer ensemble. Un réseau local comporte un équipement routeur, aussi communément appelé passerelle domestique, ou plus simplement passerelle, élément intermédiaire assurant la redirection, ou routage, des paquets de données entre les différents terminaux et réseaux qui lui sont connectés. Parce que la portée d'une telle passerelle n'est pas toujours suffisante pour couvrir la totalité des utilisateurs du réseau local, celui-ci comporte en outre fréquemment des points d'accès supplémentaires (par exemple des modules d'extension WiFi, en anglais « WiFi extenders », ou des modules de communication Bluetooth, etc.). Ainsi, lorsqu'un terminal ne peut plus accéder à un point d'accès donné, il est possible qu'il puisse se raccrocher à un autre point d'accès pour accéder aux ressources du réseau local.

Il est connu de l'état de l'art des méthodes dites de « roaming » ou « handover » permettant à un terminal de changer de point d'accès, notamment lorsque la qualité de la communication entre le terminal et le point d'accès courant auquel il est attaché descend en dessous d'un certain seuil jugé acceptable pour une bonne communication.

Par exemple, le brevet US 2004/0246922 propose une telle méthode : le terminal calcule une qualité d'association avec plusieurs points d'accès au réseau sur la base de mesures telles que la force du signal, les pertes de données, etc. Dans cette approche, le terminal maintient une liste de points d'accès possibles au réseau, comportant pour chaque point d'accès un ensemble de critères (disponibilité du point d'accès, qualité du signal, etc.) qui lui permettent de choisir à un instant donné le meilleur point d'accès.

D'autre part, le brevet US2012/099495, divulgue un procédé permettant à un point d'accès d'un réseau WLAN d'envoyer un signal d'activation à d'autres points d'accès opérants au préalable dans un mode de consommation énergétique réduit, afin de servir un terminal mobile se déplaçant au sein dudit réseau WLAN. Enfin le brevet US2016/029407 divulgue la présence d'un access point coordinator qui coordonne l'activation de points d'accès dormants afin de servir une station mobile.

Cependant, ce type de méthode suppose que les divers points d'accès soient actifs (ou tout au moins que leurs modules de communication sans fils soient allumés) en permanence, afin que la qualité de la communication entre un terminal et les différents points d'accès au réseau puisse être évaluée en temps réel. La consommation électrique et le rayonnement électromagnétique, qui sont deux points d'attention pour les foyers aujourd'hui, ne sont pas pris en compte.

L'invention offre une solution ne présentant pas les inconvénients de l'état de la technique.

### L'invention

L'invention est définie par les revendications.

A cet effet, selon un aspect fonctionnel, l'invention a pour objet un procédé de gestion de communication d'un terminal dans un réseau local équipé d'une pluralité de points d'accès au réseau et d'un dispositif de gestion d'une communication, ledit terminal étant connecté à un premier point d'accès et apte à communiquer avec au moins un second point d'accès au réseau, distinct du premier, caractérisé en ce qu'il comporte les étapes suivantes sur le dispositif de gestion d'une communication :
- réception d'une notification du premier point d'accès comprenant une indication de qualité relative à la qualité de la communication entre le terminal et ledit premier point d'accès ;
- émission d'un message de réveil vers au moins un second point d'accès ;
- obtention d'au moins une indication de qualité relative à la qualité de la communication entre le terminal et ledit au moins un second point d'accès ;
- en fonction de l'indication de qualité, sélection d'un second point d'accès à associer au terminal.

Ainsi, l'invention offre l'avantage de sélectionner à un instant donné le meilleur point d'accès pour un terminal, notamment si celui-ci se déplace dans le réseau local, tout en limitant la consommation électrique de l'ensemble des points d'accès du réseau. En effet, un point d'accès qui est en veille (ou éteint) peut être réveillé, via le message de réveil, seulement lorsqu'il est nécessaire d'effectuer une nouvelle mesure pour l'un des terminaux dans le réseau local.

Par indication de qualité relative à la qualité de la communication entre le terminal et ledit premier point d'accès, on entend une mesure de qualité relativement à tout critère ou combinaison de critères envisageable pour mesurer une qualité de communication entre un point d'accès et un terminal sur un réseau local : puissance du signal échangé, taux d'erreurs, nombre de connexions au point d'accès, performances hardware du point d'accès, etc.

Par message de réveil, on entend un message apte à faire sortie le point d'accès d'un mode de veille ; un mode de veille est un mode dans lequel sont désactivées certaines fonctionnalités du point d'accès, ce qui permet de diminuer sa consommation d'énergie tout en permettant un réveil plus rapide.

Selon un mode de mise en œuvre particulier de l'invention, un procédé tel que décrit ci-dessus est caractérisé en ce qu'il comporte en outre une étape d'émission d'un message de fermeture vers le premier point d'accès.

Avantageusement selon ce mode, le point d'accès que le terminal a quitté peut être mis en veille ou éteint, via le message de fermeture, puisqu'il sera réveillé ultérieurement lorsqu'il sera nécessaire d'effectuer une nouvelle mesure pour l'un de terminaux dans le réseau local.

Par message de fermeture, on entend un message pour demander la cessation de la communication entre le point d'accès et le terminal : demande de mise en veille, d'extinction du point d'accès, ou simple mise sur la liste noire (en anglais, *blacklistage)* du terminal considéré.

Selon un autre mode de mise en œuvre particulier de l'invention, qui pourra être mis en œuvre alternativement ou cumulativement avec le précédent, un procédé tel que décrit ci-dessus est en outre caractérisé en ce que le terminal est apte à communiquer avec au moins deux seconds points d'accès et en ce que l'étape de sélection d'un second point d'accès est suivie par une étape d'émission d'un message de fermeture vers le au moins un second point d'accès distinct du second point d'accès sélectionné.

Avantageusement selon ce mode, les (seconds) points d'accès qui n'ont pas été sélectionnés peuvent être mis ne veille ou éteints, via le message de fermeture, puisqu'ils seront réveillés ultérieurement lorsqu'il sera nécessaire d'effectuer une nouvelle mesure pour l'un de terminaux dans le réseau local.

Selon un autre mode de mise en œuvre particulier de l'invention, qui pourra être mis en œuvre alternativement ou cumulativement avec les précédents, un procédé tel que décrit ci-dessus est en outre caractérisé en ce que le second point d'accès est sélectionné si la qualité indiquée est au-dessus d'un seuil prédéterminé.

Ce mode de mise en œuvre de l'invention permet de décider rapidement si un terminal doit être détaché du point d'accès courant (lorsque l'indication de qualité passe en-dessous d'un certain seuil jugé minimal pour une communication acceptable) ou au contraire attaché à un autre point d'accès (lorsque l'indication de qualité passe au-dessus du seuil).

Selon un autre mode de mise en œuvre particulier de l'invention, qui pourra être mis en œuvre alternativement ou cumulativement avec les précédents, un procédé tel que décrit plus haut est caractérisé en outre en ce que le second point d'accès sélectionné est celui pour laquelle la qualité de la communication est la plus élevée.

Ce mode de mise en œuvre de l'invention permet de sélectionner un point d'accès parmi plusieurs qui sont potentiellement éligibles pour une communication avec le terminal. On rappelle que la qualité mesurée est relative à un critère donné ou une combinaison. Ainsi par exemple, si deux points d'accès sont éligibles et aptes à fournir des qualités de signal identiques, la sélection pourra être faite sur la base du point d'accès qui possède à cet instant le moins de terminaux connectés.

Selon une variante, un procédé tel que décrit plus haut est caractérisé en outre en ce que le message de fermeture est une demande de mise en veille du point d'accès.

Avantageusement selon cette variante, le point d'accès n'est pas complètement éteint mais mis en veille, c'est-à-dire dans un mode dans lequel il ne peut pas émettre de message de présence, ni répondre à un message de requête en provenance du réseau, ce qui diminue sa consommation électrique et force le terminal à s'accrocher à un autre point d'accès.

Selon un autre variante, un procédé tel que décrit plus haut est caractérisé en outre en ce que le message de fermeture est une demande de suppression du terminal de la liste des terminaux qui peuvent se connecter au point d'accès.

Avantageusement selon cette variante, le point d'accès n'est pas éteint ou mis en veille, ce qui peut être gênant si d'autres terminaux lui sont connectés, mais la requête lui demande seulement de « blacklister » le terminal, c'est-à-dire de le supprimer le terminal de la liste des terminaux avec lesquels il peut communiquer, ce qui contraint le terminal à s'accrocher à un autre point d'accès.

Ce mode de réalisation de l'invention permet de bénéficier d'un point d'accès « intelligent », dans la mesure où il est capable de calculer et remonter vers le module de pilotage la qualité de la communication qu'il établit avec un terminal, et de se mettre en veille (ou s'éteindre) puis se réveiller sur requête du module de pilotage, économisant ainsi l'énergie qu'il consomme.

Les objets selon cet aspect de l'invention procurent au moins les mêmes avantages que ceux procurés par le procédé selon le premier aspect. Les caractéristiques optionnelles évoquées pour le premier aspect peuvent s'appliquer ici.

Selon un aspect matériel, l'invention concerne également un dispositif de gestion de communication d'un terminal dans un réseau local équipé d'une pluralité de points d'accès au réseau, ledit terminal étant apte à communiquer avec un premier point d'accès au réseau lorsqu'il est situé dans une zone de couverture dudit point d'accès et avec au moins un second point d'accès, distinct du premier, caractérisé en ce qu'il comporte les modules suivants :
- un module de réception d'une notification du premier point d'accès comprenant une indication de qualité relative à la qualité de la communication entre le terminal et ledit premier point d'accès ;
- un module d'émission d'un message de réveil vers au moins un second point d'accès ;
- un module d'obtention d'au moins une indication de qualité relative à la qualité de la communication entre le terminal et ledit au moins un second point d'accès ;
- un module de sélection d'un second point d'accès à associer au terminal, en fonction de la mesure de qualité ;

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également une passerelle domestique comportant un dispositif de gestion d'une communication tel que décrit ci-dessus.

Selon un autre aspect matériel, l'invention concerne également un système de télécommunication dans un réseau local de communications, incluant :
- au moins un terminal,
- une pluralité de points d'accès, chacun desquels étant apte à communiquer avec le terminal lorsqu'il est situé dans une zone de couverture dudit point d'accès, comprenant :
   o un module d'évaluation de la qualité, apte à fournir une indication de qualité relative à la qualité de la communication entre le terminal et le point d'accès ;
   o un module d'émission, vers le dispositif de gestion d'une communication, d'un message de notification de la qualité comportant l'indication de qualité évaluée ;
   o un module d'obtention d'un message de modification de l'état du point d'accès, en provenance du dispositif de gestion d'une communication ;
   o un module de modification de l'état du point d'accès en fonction du message de modification reçu.
- une passerelle du réseau de communication autorisant des communications entre lesdits points d'accès et ledit au moins un terminal ;
- un dispositif de gestion d'une communication comprenant :
   o un module de réception d'une notification du premier point d'accès comprenant une indication de qualité relative à la qualité de la communication entre le terminal et ledit premier point d'accès ;
   o un module d'émission d'un message vers au moins le second point d'accès, pour activer ledit au moins un second point d'accès ;
   o un module d'obtention d'au moins une indication de qualité relative à la qualité de la communication entre le terminal et ledit au moins un second point d'accès ;
   o un module de sélection d'un second point d'accès à associer au terminal, en fonction de la mesure de qualité.

Selon un autre aspect matériel, l'invention concerne également un programme d'ordinateur apte à être mis en œuvre sur un dispositif de gestion de communication tel que défini ci-dessus, le programme comprenant des instructions de code qui, lorsque le programme est exécuté par un processeur, réalise les étapes du procédé de gestion de communication décrit ci-dessus.

Selon un autre aspect matériel, l'invention concerne également un programme d'ordinateur apte à être mis en œuvre sur un dispositif de gestion d'un point d'accès tel que défini ci-dessus, le programme comprenant des instructions de code qui, lorsque le programme est exécuté par un processeur, réalise les étapes du procédé de gestion d'un point d'accès décrit ci-dessus.

Les objets selon les aspects matériels de l'invention procurent au moins les mêmes avantages que ceux procurés par le procédé selon le premier aspect.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon encore un autre aspect matériel, l'invention a trait à un support d'enregistrement lisible par un processeur de données sur lequel est enregistré un programme comprenant des instructions de code de programme pour l'exécution des étapes d'un procédé défini ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés.

### Les figures:

La figure 1 représente une situation de « handover » dans un réseau local selon l'état de la technique.
La figure 2 représente une situation de « handover » dans un réseau local selon un mode de réalisation de l'invention.
La figure 3 représente une architecture du système selon un mode de réalisation de l'invention
La figure 4 représente un organigramme illustrant les différentes étapes d'un procédé selon un mode de réalisation de l'invention.

### Description détaillée d'un exemple de réalisation illustrant l'invention

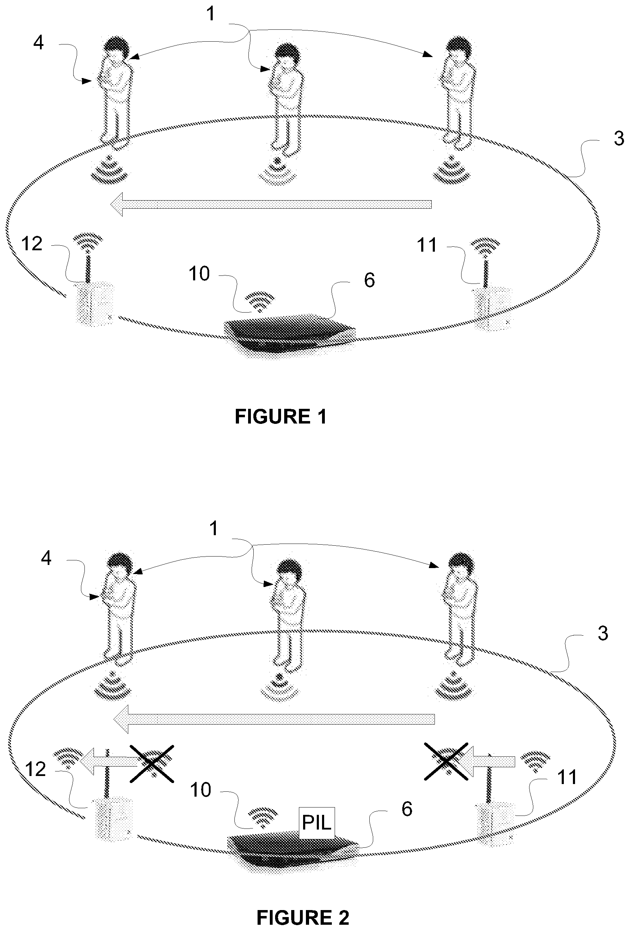

La figure 1 représente une situation de « handover » dans un réseau local selon l'état de la technique.

Le réseau local (3) est par exemple un réseau local IP (Internet Protocol) avec et/ou sans fils. Le réseau local (3) comporte une passerelle domestique (6) équipée d'un point d'accès WiFi (10), et des points d'accès secondaires, par exemple des modules d'extension WiFi (WiFi extenders) 11 et 12. Ces routeurs d'extension WiFi pourraient être, selon une variante, remplacés par des modules de communication de type Bluetooth.

L'utilisateur (1) porteur d'un dispositif portatif (4), ou terminal, se déplace dans le contexte du réseau local. Par la suite, on entend par terminal tout dispositif apte à se connecter sur le réseau local, tel un ordinateur portable, un smartphone, une tablette, un décodeur numérique de télévision, etc.

Selon l'exemple illustré, l'utilisateur bouge dans le sens de la flèche pour occuper successivement trois positions distinctes : une position initiale (à droite), une position finale (à gauche) et une position intermédiaire (au milieu). Au cours de son déplacement, il quitte progressivement la portée du point d'accès 11 auquel il est connecté pour rentrer dans celle du point d'accès 12. Lorsque la force du signal devient trop faible pour continuer à communiquer avec le point d'accès 11, il bascule sur le point d'accès 12. Selon cet exemple, les différents points d'accès (celui de la passerelle, 10, et les éléments 11 et 12) doivent être allumés en permanence pour que l'utilisateur puisse basculer de l'un à l'autre. Cette situation est consommatrice d'énergie.

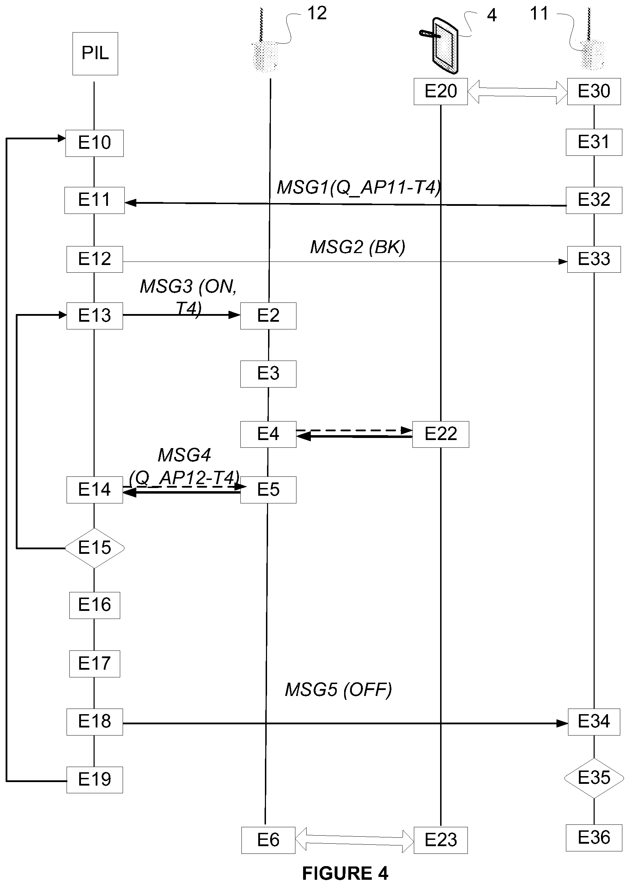

La figure 2 représente une situation de « handover » dans un réseau local selon un mode de réalisation de l'invention qui sera illustré plus en détail à l'appui de la figure 4. Comme décrit précédemment à l'appui de la figure 1, l'utilisateur (1) porteur d'un terminal (4) se déplace dans le contexte du réseau local, dans le sens de la flèche. A la différence de la situation illustrée à la figure 1, cependant, seuls les points d'accès auxquels sont effectivement connectés des terminaux sont actifs. Les autres (pour lesquels aucune connexion n'est enregistrée) sont inactifs, ils sont par exemple en état de veille, c'est-à-dire que leur consommation est réduite mais qu'ils peuvent être réveillés par un message de réveil.

De manière générale, un terminal d'un réseau domestique consomme de l'énergie. Il est donc usuel de l'éteindre ou de le mettre en veille lorsqu'il n'est pas nécessaire de l'utiliser. Un mode de veille est un mode dans lequel sont désactivées certaines fonctionnalités du terminal, ce qui permet de diminuer sa consommation d'énergie tout en permettant un réveil plus rapide. Il existe parfois plusieurs niveaux de veille pour un même équipement. Par exemple, une veille dite « active » se caractérise par un fonctionnement limité du point d'accès : le point d'accès WiFi, qui utilise normalement un mode AP (access point) et un mode STA (station) simultanément, va arrêter sa fonction AP mais conserver sa fonction STA qui maintient la communication avec le point d'accès auquel il est connecté, afin de maintenir le canal de transmission des messages. Dans la suite, on entend par veille un état de l'équipement dans lequel il ne peut pas émettre de message de présence, ni répondre à un message de requête en provenance du réseau.

Il existe plusieurs mécanismes de réveil des terminaux d'un réseau local : si les équipements sont connectés en Ethernet, on peut imaginer d'utiliser un protocole de réveil de type « Wake on Lan (WoL) », un standard des réseaux Ethernet qui permet à un terminal éteint d'être démarré à distance. Un protocole similaire, « Wake on WLAN (WoWL) » peut être utilisé pour un terminal connecté en Wi-FI. Si les équipements disposent d'un module Zigbee, une technologie sans fil radio de basse puissance, il est possible d'échanger sur un canal radio des messages conformes au protocole ZigBee. Dans ce dernier cas il est possible d'adresser des terminaux qui sont dans des états de veille, voir éteints, puisque le module qui assure le protocole Zigbee peut disposer de sa propre alimentation, et donc réveiller le terminal éteint sur réception du message de réveil.

Il est donc intéressant de pouvoir éteindre ou mettre en veille les points d'accès au réseau lorsqu'aucun terminal ne leur est connecté, et de les rallumer si la connexion d'un terminal devient pertinente. A cet effet, le système comporte un module de pilotage apte à piloter et contrôler l'état des points d'accès dans le réseau, et des points d'accès dotés par ailleurs d'un module intelligent qui leur permet de transmettre des informations, comme par exemple le niveau de puissance mesuré entre un point d'accès et un terminal, ainsi que de passer en veille ou de se réveiller sur requête du module de pilotage.

Selon l'exemple illustré à la figure 2, grâce au module de pilotage et au module intelligent des points d'accès, les étapes suivantes sont enchaînées au fur et à mesure que l'utilisateur se déplace vers la gauche :
1. Le terminal de l'utilisateur est attaché au point d'accès 11 pour communiquer sur le réseau local. Le point d'accès 12 est en veille. Le point d'accès 10 de la passerelle 6 est allumé car d'autres terminaux lui sont connectés.
2. L'utilisateur commence à se déplacer, s'éloigne du point d'accès 11, donc la qualité de la communication décroît.
3. Le module de pilotage détecte cette décroissance de qualité (par exemple sur réception d'un message d'alerte du point d'accès) et réactive (réveille) tous les points d'accès qui sont en veille, afin d'effectuer des mesures ; en l'occurrence dans cet exemple, le point d'accès 12 est en veille, le module de pilotage le réveille donc (en lui transmettant par exemple un message WoWL) et obtient de sa part des mesures de qualité de la connexion entre le point d'accès 12 et le terminal (4). Le point d'accès 10 de la passerelle est resté allumé, il n'est donc pas nécessaire de le réveiller, mais seulement de récupérer des mesures de qualité de la connexion entre le point d'accès de la passerelle (10) et le terminal (4).
4. Le module de pilotage choisit le meilleur point d'accès, selon notre exemple le 12, et demande aux autres (10 et 11) de se mettre en veille. Sur obtention de ce message, le point d'accès 11 se met en veille car aucun autre terminal ne lui est connecté, et le point d'accès 10 de la passerelle reste allumé car un certain nombre de terminaux du réseau local lui sont connectés.

Ainsi, à un instant donné, un point d'accès qui n'est pas utile peut être mis en veille grâce au module de pilotage, ce qui permet de réaliser des économies et de supprimer les effets d'ondes non souhaités par l'utilisateur.

Un module de pilotage tel que décrit ici est donc capable d'allumer ou d'éteindre un point d'accès, de mesurer les niveaux de qualité de communication entre tous les points d'accès et terminaux afin de choisir quels points d'accès doivent être allumés ou éteints, et de réveiller tous les points d'accès afin d'effectuer de nouvelles mesures sur notification de l'un d'entre eux.

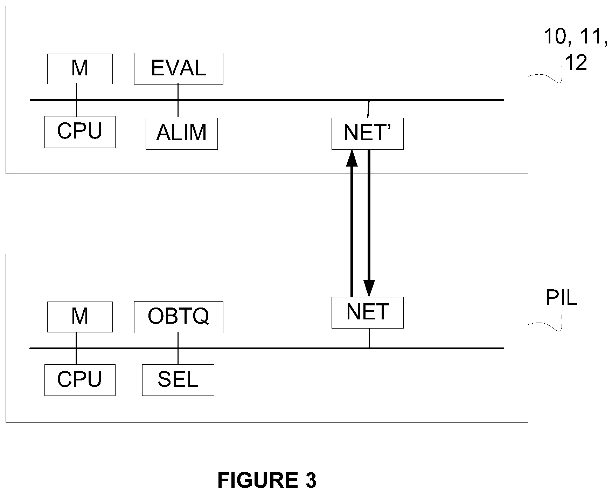

La figure 3 représente une architecture du système selon un mode de réalisation de l'invention.

Selon ce mode de réalisation, le module de pilotage (PIL) est indépendant, ou inclus dans l'un des équipements connectés du réseau local (PC, disque dur, TV, etc.). Il est relié aux différents points d'accès (10, 11, 12) de manière à remplir les fonctionnalités qui ont été énoncées ci-dessus :
- allumer, réveiller, mettre en veille ou éteindre un point d'accès ;
- demander la radiation d'un terminal de la liste des terminaux du point d'accès *(blacklistage) ;*
- obtenir au moins une valeur de qualité de la communication entre un point d'accès et un terminal, selon un critère donné ;
- choisir, en fonction de la valeur mesurée sur différents points d'accès, à quel point d'accès doit être connecté un terminal.

Le module de pilotage PIL comprend, classiquement, des mémoires (M) associées à un processeur (CPU). Les mémoires peuvent être de type ROM (de l'anglais *Read On*/*y Memory)* ou RAM (de l'anglais *Random Access Memory)* ou encore Flash. Il communique avec le réseau local et le réseau Internet via le module NET (Ethernet, ADSL, WiFI, Bluetooth, Zigbee, etc.). Un module Ethernet permet notamment d'émettre et recevoir des commandes de réveil de type WoL. Un module WIFI/Bluetooth permet de communiquer sans fils sur un canal radio. Un module Zigbee permet d'échanger sur un canal radio des messages conformes au protocole ZigBee (par exemple des messages de réveil). Le module NET est apte en outre à transmettre les ordres appropriés pour une modification de l'état du point d'accès (mise en veille, extinction, sortie de veille, rallumage, « blacklistage » d'un terminal, etc.) et recevoir des notifications de la part du point d'accès concernant la qualité de la communication avec les différents terminaux.

Le dispositif comporte en outre, conformément à ce mode de réalisation de l'invention , un module OBTQ pour obtenir au moins une valeur de qualité de la communication entre un point d'accès et un terminal, selon un critère donné et un module SEL pour sélectionner un point d'accès.

Le point d'accès (PA, 10, 11, 12) selon l'invention comporte pour sa part, classiquement, des mémoires (M) associées à un processeur (CPU). Les mémoires peuvent être de type ROM (de l'anglais *Read On*/*y Memory)* ou RAM (de l'anglais *Random Access Memory)* ou encore Flash. Le point d'accès (10, 11, 12) communique avec le réseau local et le réseau Internet via un module NET' (Ethernet, ADSL, WiFI, Bluetooth, Zigbee, etc.). Il échange notamment par ce biais des notifications vers le point d'accès concernant la qualité de la communication avec les différents terminaux. Le point d'accès comporte en outre :
- un module de gestion ALIM pour analyser les ordres reçus de la part du point d'accès concernant l'état, notamment électrique, du point d'accès et prendre les actions adéquates (mise en veille, extinction, rallumage, etc.)
- un module EVAL d'évaluation de la qualité d'une communication avec un terminal donné, en fonction d'un certain critère de qualité.

Selon un autre mode de réalisation de l'invention, le module de pilotage est intégré à la passerelle domestique. Il peut s'agit, par exemple, d'un simple module logiciel de la passerelle faisant usage des modules logiciels et matériels présents dans la passerelle, ou selon un autre exemple d'une entité matérielle indépendante hébergée par la passerelle.

La figure 4 représente un organigramme illustrant les différentes étapes d'un procédé selon un mode de réalisation de l'invention.

Le système décrit sur la figure 4 reprend le contexte de la figure 2 : il comporte un premier terminal (4) qui utilise le réseau local, un second terminal (2, non représenté), deux points d'accès (11) et (12) et un module de pilotage (PIL) qui peut être installé sur le réseau local de manière autonome, ou faire partie de l'un des objets du réseau local (passerelle, PC, STB, etc.)

Selon cet exemple, le terminal (4) est tout d'abord connecté au point d'accès 11.

Lors d'une étape E10 initiale, le module PIL de pilotage prend connaissance ou apprend la topologie de la maison, c'est-à-dire qu'il prend connaissance des différents points d'accès disponibles pour le réseau local, puis il initialise une table dite « table des associations » qui comporte pour chaque point d'accès :
- son état électrique (allumé/éteint/en veille, etc.)
- un critère de qualification de la qualité de la communication entre le point d'accès et les terminaux du réseau. On suppose selon cet exemple que deux terminaux (4, 2) seulement sont susceptibles de changer de position dans le réseau, et de ce fait de quitter un point d'accès pour en rallier (se raccrocher à) un autre.

Toute valeur initiale de qualité peut être utilisée dans cette table. En effet on peut choisir que cette valeur est sans objet lors de l'étape d'initialisation. En variante, on peut disposer dans la table la dernière valeur mémorisée lors d'un précédent calcul, ou encore une valeur différentielle correspondant à plusieurs mesures précédentes, etc.

Naturellement cette table n'est qu'un exemple possible d'implémentation, donné à titre illustratif. Tout autre moyen à la portée de l'homme du métier permettant d'enregistrer les informations relatives à la qualité des communications peut être utilisé.

**Fig.1 : Table des associations du module de pilotage (PIL) - état initial**

| #AP | AP ON/OFF | Signal /Terminal (4) | Signal /Terminal (2) |
|---|---|---|---|
| 10 | ON | 5 | 2 |
| 11 | ON | 10 | 3 |
| 12 | OFF | 2 | 4 |

Lors d'une étape E11, le module de pilotage reçoit un message (MSG1) de la part du point d'accès 11 concernant le terminal 4. Ce message comporte au moins une information relative à la qualité de la communication entre le point d'accès et le terminal, qui a été calculée par le point d'accès lors de l'étape E31. Elle est notée Q_AP11-T4 pour signifier une mesure de qualité entre le point d'accès 11 et le terminal 4. Les identifiants utilisés pour repérer le point d'accès et le terminal peuvent être par exemple leurs adresses IP, MAC, etc. Le critère utilisé pour mesurer la qualité de la communication entre le point d'accès et le terminal peut être par exemple une mesure du débit utile entre les deux dispositifs, de la puissance du signal, du taux de réémission des paquets, etc. On notera que le point d'accès peut choisir de transmettre ce message uniquement quand la qualité du signal mesurée passe en dessous d'un certain seuil de qualité (acceptable) prédéfini. Dans ce cas, ce message peut être vide de toute valeur explicite de qualité, mais indiquer simplement que la qualité n'est plus acceptable.

La qualité liée au critère décroît du fait du mouvement de l'utilisateur, jusqu'à franchir un seuil prédéterminé. Ce seuil dépend du critère, de la topologie du réseau, du nombre de points d'accès, etc. Par exemple, si le critère mesure la puissance du signal, ce seuil peut être fixé à -65 dBm (décibels-milliwatt) pour pouvoir traiter un flux vidéo, -70 dBm pour échanger des messages de type e-mail, etc.

Lors d'une étape E12, le module de pilotage transmet au point d'accès un message MSG2 pour lui signifier la fin de la communication avec le terminal 4. Selon la terminologie en usage, le point d'accès est ici « blacklisté », ou mis sur la liste noire des points d'accès qui ne peuvent plus accepter la communication avec le terminal. Alternativement le module de pilotage peut transmettre au point d'accès une demande de mise en veille et/ou extinction. La prise en compte de ce message a pour conséquence que le terminal 4 pourra se reconnecter automatiquement, comme il sera vu plus tard, au point d'accès qui sera choisi pour lui par le procédé selon l'invention : il ne peut en effet se reconnecter à un second point d'accès que s'il a quitté le premier.

Puis lors d'une étape E13, le point d'accès réactive un autre point d'accès par envoi d'un message de réveil. Ce message est noté MSG3 (ON, T4) pour indiquer une demande d'activation du point d'accès dans le but de mesurer la qualité de la communication avec le terminal 4. Selon l'exemple, le point d'accès 12, sur réception de ce message, se rallume s'il est éteint, lors d'une étape E3, puis mesure lors d'une étape E4 la qualité de la communication, selon le critère applicable (débit, pertes, etc.) avec le terminal 4 dont il a reçu en paramètre du message MSG3 une valeur d'identification (T4). Pour mesurer la qualité de la communication, toute technique à la portée de l'homme du métier peut être envisagée : mesure de débit sur utilisation d'un outil de mesure des performances, mesure de l'atténuation avec les données de l'antenne Wi-FI, indicateurs accessibles dans les mesures de la carte WiFi (atténuation, etc.)

On notera qu'alternativement, l'identification du terminal peut ne pas être transmise dans le message, le point d'accès ayant alors en charge de mesurer la qualité de la communication avec tous les terminaux qui peuvent lui être connectés.

Lors d'une étape E14, le module de pilotage PIL reçoit une indication de qualité mesurée, en provenance du point d'accès, sous forme d'un message noté MSG4 (Q_AP12-T4).

Lors d'une étape E15, il analyse l'indication de qualité reçue. Si le critère est rempli, c'est-à-dire si par exemple la communication avec le point d'accès est au-dessus d'un certain seuil prédéterminé, on peut se contenter selon une première variante de retenir (sélectionner) ce point d'accès et donc de poursuivre par l'étape E16. Si au contraire le critère n'est pas rempli, on revient à l'étape E13 pour choisir un autre point d'accès.

On notera que, selon une variante, on peut revenir à l'étape E13 indépendamment du résultat du test, afin de collecter les informations relatives à plusieurs points d'accès pour en retenir le meilleur.

Selon encore une autre variante, on peut diffuser le message MSG3 à tous les points d'accès simultanément, en utilisant par exemple une commande multicast, ou en dirigeant le message vers tous les points d'accès connus, etc.

La table des associations TA peut alors être remise à jour au cours d'une étape E16. Selon un exemple, on aboutit à table mise à jour comme présentée ci-dessous, dans laquelle :
- tous les appareils sont allumés (ON) ;
- les mesures de qualité de communication ont été mises à jour pour les trois points d'accès et les deux terminaux ;
- le terminal 4 est *blacklisté* sur le point d'accès 11 (BK).

**Fig.2 : Table des associations du module de pilotage (PIL) - mise à jour**

| #AP | AP ON/OFF | Signal /Terminal (4) | Signal /Terminal (2) |
|---|---|---|---|
| 10 | ON | 5 | 10 |
| 11 | ON | BK | 2 |
| 12 | ON | 10 | 2 |

Puis, lors d'une étape E17, le module de pilotage choisit le « meilleur » AP, c'est-à-dire celui qui remplit au mieux le critère de qualité requis.

Lors d'une étape E18 successive, le point d'accès le plus favorable ayant été choisi, c'est-à-dire le 12 selon l'exemple, les autres points d'accès, qui n'ont pas été sélectionnés, peuvent être mis en veille, ou éteints, indépendamment du fait qu'ils aient été ou non *blacklistés* à l'étape E12. Un message MSG5 leur est transmis à cet effet.

Lors d'une étape E19 finale, la table des associations peut être de nouveau actualisée par une mise à jour notamment de l'état (allumé/éteint/en veille) des points d'accès. Un retour peut alors être effectué à l'étape E10, en attente d'un nouveau message en provenance d'un point d'accès.

A l'issue du procédé selon cet exemple, le terminal 4 est en communication avec le point d'accès 12 et le point d'accès 11 est en veille (ou éteint).

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de gestion de communication d'un terminal (4, 2) dans un réseau local (3) piloté par une passerelle domestique et équipé d'une pluralité de points d'accès au réseau (10, 11, 12), la passerelle comportant un dispositif de gestion d'une communication (PIL), ledit terminal (4) étant connecté à un premier point d'accès (11) et apte à communiquer avec au moins un second point d'accès au réseau (10, 12), distinct du premier, le procédé comportant les étapes suivantes sur le dispositif de gestion d'une communication:
- réception (E11) d'une notification (MSG1) du premier point d'accès comprenant une indication de la décroissance de qualité (Q_AP11-T4) relative à la qualité de la communication entre le terminal et ledit premier point d'accès ;
- sur réception de cette notification, émission (E13) d'un message de réveil (MSG3) vers un point d'accès de la pluralité de points d'accès distinct du premier, dit second point d'accès courant (10, 12) ;
- obtention (E14) d'au moins une indication de qualité (MSG4, Q_AP12-T4) relative à la qualité de la communication entre le terminal et ledit second point d'accès courant ;
- en fonction de l'indication de qualité (Q_AP12-T4), sélection (E17) dudit second point d'accès (12) courant pour l'associer au terminal (1).

2. Procédé de gestion de communication selon la revendication 1, **caractérisé en ce qu'**il comporte en outre une étape d'émission (E12, E18) d'un message de fermeture (MSG2, MSG5) vers le premier point d'accès (11).

3. Procédé de gestion de communication selon la revendication 1, **caractérisé en ce que** le terminal est apte à communiquer avec au moins deux seconds points d'accès et **en ce que** l'étape de sélection (E17) du second point d'accès courant est suivie par une étape d'émission (E18) d'un message de fermeture (MSG5) vers le au moins un second point d'accès distinct (10) du second point d'accès courant sélectionné.

4. Procédé de gestion de communication selon la revendication 1, **caractérisé en ce qu'**un second point d'accès courant est sélectionné si la qualité indiquée est au-dessus d'un seuil prédéterminé.

5. Procédé de gestion de communication selon la revendication 1, **caractérisé en ce que** le second point d'accès courant sélectionné est celui pour laquelle la qualité de la communication est la plus élevée parmi la pluralité de seconds points d'accès.

6. Procédé de gestion de communication selon la revendication 2 ou 3, **caractérisé en ce que** le message de fermeture (MSG5) est une demande de mise en veille du point d'accès.

7. Procédé de gestion de communication selon la revendication 2 ou 3, **caractérisé en ce que** le message de fermeture (MSG5) est une demande de suppression du terminal de la liste des terminaux qui peuvent se connecter au point d'accès.

8. Dispositif de gestion (PIL) d'une communication d'un terminal (4,2) dans un réseau local (3) piloté par une passerelle domestique et équipé d'une pluralité de points d'accès au réseau (10, 11, 12), la passerelle comportant le dispositif de gestion (PIL), ledit terminal (4) étant apte à communiquer avec un premier point d'accès au réseau (11) lorsqu'il est situé dans une zone de couverture dudit point d'accès et avec au moins un second point d'accès (10, 12), distinct du premier, ledit dispositif comportant les modules suivants :
- un module de réception (NET) d'une notification (MSG1) du premier point d'accès comprenant une indication de la décroissance de qualité (Q_AP11-T4) relative à la qualité de la communication entre le terminal et ledit premier point d'accès ;
- un module d'émission (NET) d'un message de réveil (MSG3) vers un point d'accès de la pluralité de points d'accès distinct du premier, dit second point d'accès (10, 12) courant, sur réception de cette notification;
- un module d'obtention (OBTQ) d'au moins une indication de qualité (Q_AP12-T4) relative à la qualité de la communication entre le terminal et ledit second point d'accès courant;
- un module de sélection (SEL) du second point d'accès (12) courant pour l'associer au terminal (1), en fonction de l'indication de qualité (Q_AP12-T4) .

9. Passerelle domestique (6) comportant un dispositif de gestion d'une communication (PIL) selon la revendication 8.

10. Système de télécommunication dans un réseau local de communications, incluant :
- au moins un terminal (2, 4),
- une pluralité de points d'accès (10, 11, 12), chacun desquels étant apte à communiquer avec le terminal (4) lorsqu'il est situé dans une zone de couverture dudit point d'accès, comprenant :
o un module d'évaluation (EVAL) de la qualité, apte à fournir une indication de qualité (Q_AP11-T4, Q_AP12-T4) relative à la qualité de la communication entre le terminal et le point d'accès ;
o un module d'émission (NET), vers le dispositif de gestion d'une communication, d'un message de notification de la qualité (MSG1, MSG4) comportant l'indication de qualité (Q_AP11-T4, Q_AP12-T4) évaluée ;
o un module d'obtention (NET) d'un message de modification (MSG2, MSG5) de l'état du point d'accès, en provenance du dispositif de gestion d'une communication;
o un module de modification (ALIM) de l'état du point d'accès en fonction du message de modification reçu.
- une passerelle (6) du réseau de communication autorisant des communications entre lesdits points d'accès et ledit au moins un terminal (2,4) et comportant un dispositif de gestion d'une communication (PIL) comprenant :
o un module de réception (NET) d'une notification (MSG1) d'un premier point d'accès connecté au terminal, comprenant une indication de qualité (Q_AP11-T4) relative à la décroissance de qualité de la communication entre le terminal et ledit premier point d'accès ;
o un module d'émission (NET) d'un message de réveil (MSG3) vers un second point d'accès (10, 12) de la pluralité de seconds points d'accès, dit second point d'accès courant, distinct du premier, pour activer ledit second point d'accès ;
o un module d'obtention (OBTQ) d'au moins une indication de qualité (Q_AP12-T4) relative à la qualité de la communication entre le terminal et ledit second point d'accès courant ;
o un module de sélection (SEL) du second point d'accès courant (12) pour l'associer au terminal (1) parmi la pluralité de seconds points d'accès, en fonction de la mesure de qualité (Q_AP12-T4) ;

11. Programme d'ordinateur apte à être mis en œuvre sur un dispositif de gestion (PIL) de communication telle que défini dans la revendication 8, le programme comprenant des instructions de code qui, lorsque le programme est exécuté par un processeur, réalise les étapes du procédé défini selon la revendication 1.

## Patentansprüche

1. Verfahren zur Kommunikationsverwaltung eines Endgeräts (4, 2) in einem lokalen Netzwerk (3), das von einem Heim-Gateway gesteuert wird und mit einer Vielzahl von Zugangspunkten zum Netzwerk (10, 11, 12) ausgestattet ist, wobei das Gateway eine Verwaltungsvorrichtung einer Kommunikation (PIL) aufweist, wobei das Endgerät (4) mit einem ersten Zugangspunkt (11) verbunden und fähig ist, mit mindestens einem zweiten Zugangspunkt zum Netzwerk (10, 12) anders als der erste zu kommunizieren, wobei das Verfahren die folgenden Schritte in der Verwaltungsvorrichtung einer Kommunikation enthält:
- Empfang (E11) einer Mitteilung (MSG1) vom ersten Zugangspunkt, die eine Anzeige des Qualitätsabfalls (Q_AP11-T4) bezüglich der Qualität der Kommunikation zwischen dem Endgerät und dem ersten Zugangspunkt enthält;
- bei Empfang dieser Mitteilung, Senden (E13) einer Aufwachnachricht (MSG3) an einen Zugangspunkt der Vielzahl von Zugangspunkten anders als der erste, aktueller zweiter Zugangspunkt (10, 12) genannt;
- Erhalt (E14) mindestens einer Qualitätsanzeige (MSG4, Q_AP12-T4) bezüglich der Qualität der Kommunikation zwischen dem Endgerät und dem aktuellen zweiten Zugangspunkt;
- abhängig von der Qualitätsanzeige (Q_AP12-T4), Auswahl (E17) des aktuellen zweiten Zugangspunkts (12), um ihn dem Endgerät (1) zuzuordnen.

2. Kommunikationsverwaltungsverfahren nach Anspruch 1, **dadurch gekennzeichnet, dass** es außerdem einen Schritt des Sendens (E12, E18) einer Schließnachricht (MSG2, MSG5) an den ersten Zugangspunkt (11) enthält.

3. Kommunikationsverwaltungsverfahren nach Anspruch 1, **dadurch gekennzeichnet, dass** das Endgerät fähig ist, mit mindestens zwei zweiten Zugangspunkten zu kommunizieren, und dass auf den Schritt der Auswahl (E17) des aktuellen zweiten Zugangspunkts ein Schritt des Sendens (E18) einer Schließnachricht (MSG5) an den mindestens einen zweiten Zugangspunkt (10) anders als der ausgewählte aktuelle zweite Zugangspunkt folgt.

4. Kommunikationsverwaltungsverfahren nach Anspruch 1, **dadurch gekennzeichnet, dass** ein aktueller zweiter Zugangspunkt ausgewählt wird, wenn die angezeigte Qualität über einer vorbestimmten Schwelle liegt.

5. Kommunikationsverwaltungsverfahren nach Anspruch 1, **dadurch gekennzeichnet, dass** der ausgewählte aktuelle zweite Zugangspunkt unter der Vielzahl von zweiten Zugangspunkten derjenige ist, für den die Qualität der Kommunikation die höchste ist.

6. Kommunikationsverwaltungsverfahren nach Anspruch 2 oder 3, **dadurch gekennzeichnet, dass** die Schließnachricht (MSG5) eine Forderung des Versetzens des Zugangspunkts in den Standby-Modus ist.

7. Kommunikationsverwaltungsverfahren nach Anspruch 2 oder 3, **dadurch gekennzeichnet, dass** die Schließnachricht (MSG5) eine Forderung des Löschens des Endgeräts aus der Liste der Endgeräte ist, die sich mit dem Zugangspunkt verbinden können.

8. Verwaltungsvorrichtung (PIL) einer Kommunikation eines Endgeräts (4, 2) in einem lokalen Netzwerk (3), das von einem Heim-Gateway gesteuert wird und mit einer Vielzahl von Zugangspunkten zum Netzwerk (10, 11, 12) ausgestattet ist, wobei das Gateway die Verwaltungsvorrichtung (PIL) aufweist, wobei das Endgerät (4) fähig ist, mit einem ersten Zugangspunkt zum Netzwerk (11), wenn es sich in einem Abdeckungsgebiet des Zugangspunkts befindet, und mit mindestens einem zweiten Zugangspunkt (10, 12) anders als der erste zu kommunizieren, wobei die Vorrichtung die folgenden Module aufweist:
- ein Empfangsmodul (NET) einer Mitteilung (MSG1) des ersten Zugangspunkts, die eine Anzeige des Qualitätsabfalls (Q_AP11-T4) bezüglich der Qualität der Kommunikation zwischen dem Endgerät und dem ersten Zugangspunkt enthält;
- ein Sendemodul (NET) einer Aufwachnachricht (MSG3) an einen Zugangspunkt der Vielzahl von Zugangspunkten anders als der erste, aktueller zweiter Zugangspunkt (10, 12) genannt, bei Empfang dieser Mitteilung;
- ein Erhaltsmodul (OBTQ) mindestens einer Qualitätsanzeige (Q_AP12-T4) bezüglich der Qualität der Kommunikation zwischen dem Endgerät und dem aktuellen zweiten Zugangspunkt;
- ein Auswahlmodul (SEL) des aktuellen zweiten Zugangspunkts (12), um ihn dem Endgerät (1) zuzuordnen, abhängig von der Qualitätsanzeige (Q_AP12-T4) .

9. Heim-Gateway (6), das eine Verwaltungsvorrichtung einer Kommunikation (PIL) nach Anspruch 8 aufweist.

10. Telekommunikationssystem in einem lokalen Kommunikationsnetzwerk, das umfasst:
- mindestens ein Endgerät (2, 4),
- eine Vielzahl von Zugangspunkten (10, 11, 12), von denen jeder fähig ist, mit dem Endgerät (4) zu kommunizieren, wenn es sich in einem Abdeckungsbereich des Zugangspunkts befindet, die enthalten:
o ein Ermittlungsmodul (EVAL) der Qualität, das fähig ist, eine Qualitätsanzeige (Q_AP11-T4, Q_AP12-T4) bezüglich der Qualität der Kommunikation zwischen dem Endgerät und dem Zugangspunkt zu liefern;
o ein Sendemodul (NET), zur Verwaltungsvorrichtung einer Kommunikation, einer Mitteilungsnachricht der Qualität (MSG1, MSG4), die die ermittelte Qualitätsanzeige (Q_AP11-T4, Q_AP12-T4) aufweist;
o ein Erhaltsmodul (NET) einer Änderungsnachricht (MSG2, MSG5) des Zustands des Zugangspunkts, ausgehend von der Verwaltungsvorrichtung einer Kommunikation;
o ein Änderungsmodul (ALIM) des Zustands des Zugangspunkts abhängig von der empfangenen Änderungsnachricht;
- ein Gateway (6) des Kommunikationsnetzwerks, das Kommunikationen zwischen den Zugangspunkten und dem mindestens einen Endgerät (2, 4) genehmigt und eine Verwaltungsvorrichtung einer Kommunikation (PIL) aufweist, die enthält:
o ein Empfangsmodul (NET) einer Mitteilung (MSG1) eines mit dem Endgerät verbundenen ersten Zugangspunkts, die eine Qualitätsanzeige (Q_AP11-T4) bezüglich des Qualitätsabfalls der Kommunikation zwischen dem Endgerät und dem ersten Zugangspunkt enthält;
o ein Sendemodul (NET) einer Aufwachnachricht (MSG3) an einen zweiten Zugangspunkt (10, 12) der Vielzahl zweiter Zugangspunkte, aktueller zweiter Zugangspunkt genannt, anders als der erste, um den zweiten Zugangspunkt zu aktivieren;
o ein Erhaltsmodul (OBTQ) mindestens einer Qualitätsanzeige (Q_AP12-T4) bezüglich der Qualität der Kommunikation zwischen dem Endgerät und dem aktuellen zweiten Zugangspunkt;
o ein Auswahlmodul (SEL) des aktuellen zweiten Zugangspunkts (12) unter der Vielzahl zweiter Zugangspunkte, um ihn dem Endgerät (1) zuzuordnen, abhängig von der Qualitätsmessung (Q_AP12-T4) ;

11. Computerprogramm, das an einer Verwaltungsvorrichtung (PIL) einer Kommunikation wie in Anspruch 8 definiert durchgeführt werden kann, wobei das Programm Codeanweisungen enthält, die, wenn das Programm von einem Prozessor ausgeführt wird, die Schritte des nach Anspruch 1 definierten Verfahrens durchführen.

## Claims

1. Method for managing communication of a terminal (4, 2) in a local area network (3) controlled by a residential gateway and equipped with a plurality of network access points (10, 11, 12), the gateway comprising a communication management device (PIL), said terminal (4) being connected to a first access point (11) and able to communicate with at least one second network access point (10, 12), which is distinct from the first one, the method comprising the following steps on the communication management device:
- receiving (E11) a notification (MSG1) from the first access point comprising an indication (Q_AP11-T4) of the decline in quality relating to the quality of communication between the terminal and said first access point;
- on receiving this notification, sending (E13) a wake-up message (MSG3) to an access point in the plurality of access points which is distinct from the first one, referred to as the current second access point (10, 12);
- obtaining (E14) at least one indication (MSG4, Q_AP12-T4) of quality relating to the quality of communication between the terminal and said current second access point;
- depending on the indication (Q_AP12-T4) of quality, selecting (E17) said current second access point (12) in order to associate it with the terminal (1).

2. Communication management method according to Claim 1, **characterized in that** it further comprises a step of sending (E12, E18) a closure message (MSG2, MSG5) to the first access point (11).

3. Communication management method according to Claim 1, **characterized in that** the terminal is able to communicate with at least two second access points and **in that** the step of selecting (E17) the current second access point is followed by a step of sending (E18) a closure message (MSG5) to the at least one second access point (10) which is distinct from the current second access point selected.

4. Communication management method according to Claim 1, **characterized in that** a current second access point is selected if the quality indicated is above a predetermined threshold.

5. Communication management method according to Claim 1, **characterized in that** the current second access point selected is the one for which the quality of communication is highest from among the plurality of second access points.

6. Communication management method according to Claim 2 or 3, **characterized in that** the closure message (MSG5) is a request to put the access point on standby.

7. Communication management method according to Claim 2 or 3, **characterized in that** the closure message (MSG5) is a request to delete the terminal from the list of terminals which may connect to the access point.

8. Device (PIL) for managing communication of a terminal (4, 2) in a local area network (3) controlled by a residential gateway and equipped with a plurality of network access points (10, 11, 12), the gateway comprising the management device (PIL), said terminal (4) being able to communicate with a first network access point (11) when it is located in an area of coverage of said access point and with at least one second access point (10, 12), which is distinct from the first one, said device comprising the following modules:
- a module (NET) for receiving a notification (MSG1) from the first access point comprising an indication (Q_AP11-T4) of the decline in quality relating to the quality of communication between the terminal and said first access point;
- a module (NET) for sending a wake-up message (MSG3) to an access point in the plurality of access points which is distinct from the first one, referred to as the current second access point (10, 12), on receiving this notification;
- a module (OBTQ) for obtaining at least one indication (Q_AP12-T4) of quality relating to the quality of communication between the terminal and said current second access point;
- a module (SEL) for selecting the current second access point (12) in order to associate it with the terminal (1), depending on the indication (Q_AP12-T4) of quality.

9. Residential gateway (6) comprising a communication management device (PIL) according to Claim 8.

10. System for telecommunication in a local area communications network, including:
- at least one terminal (2, 4),
- a plurality of access points (10, 11, 12), each of which is able to communicate with the terminal (4) when it is located in an area of coverage of said access point, comprising:
o a module (EVAL) for evaluating quality, which is able to provide an indication (Q_AP11-T4, Q_AP12-T4) of quality relating to the quality of communication between the terminal and the access point;
o a module (NET) for sending a message (MSG1, MSG4) to notify of quality, comprising the indication (Q_AP11-T4, Q_AP12-T4) of quality evaluated, to the communication management device;
o a module (NET) for obtaining a message (MSG2, MSG5) to modify the state of the access point, originating from the communication management device;
o a module (ALIM) for modifying the state of the access point depending on the modification message received;
- a gateway (6) of the communication network authorizing communications between said access points and said at least one terminal (2, 4) and comprising a communication management device (PIL) comprising:
o a module (NET) for receiving a notification (MSG1) from a first access point connected to the terminal, comprising an indication (Q_AP11-T4) of quality relating to the decline in quality of communication between the terminal and said first access point;
o a module (NET) for sending a wake-up message (MSG3) to a second access point (10, 12) in the plurality of second access points, referred to as the current second access point, which is distinct from the first one, in order to activate said second access point;
o a module (OBTQ) for obtaining at least one indication (Q_AP12-T4) of quality relating to the quality of communication between the terminal and said current second access point;
o a module (SEL) for selecting the current second access point (12) in order to associate it with the terminal (1) from among the plurality of second access points, depending on the measurement (Q_AP12-T4) of quality;

11. Computer program which is able to be implemented on a communication management device (PIL) as defined in Claim 8, the program comprising code instructions which, when the program is executed by a processor, perform the steps of the method defined according to Claim 1.
